# EUROPÄISCHE PATENTSCHRIFT

(11) **EP 0 312 146 B1**
(45) Veröffentlichungstag und Bekanntmachung des Hinweises auf die Patenterteilung: **31.03.1993**
(21) Anmeldenummer: 88202156.1
(22) Anmeldetag: 30.09.1988
(51) Int. Cl.: C04B 35/54, C04B 41/53

(54) **Verfahren zur Herstellung von Formkörpern aus pyrolytischem Graphit**
Process for the production of shaped articles from pyrolitic graphite
Procédé de fabrication d'articles moulés en graphite pyrolitique

(30) Priorität: 15.10.1987 DE 3734887
(43) Veröffentlichungstag der Anmeldung: 19.04.1989
(73) Patentinhaber: Philips Patentverwaltung GmbH, 22335 Hamburg (DE); Philips Electronics N.V., 5621 BA Eindhoven (NL)
(72) Erfinder: Lersmacher, Bernard, Dr., D-5100 Aachen (DE); Knippenberg, Wilhelmus Franziskus, Dr., NL-5582 EL Waalre (NL)
(74) Vertreter: Koch, Ingo

(56) Entgegenhaltungen:
- DE-A- 1 471 172
- FR-A- 2 290 026
- GB-A- 1 181 861
- US-A- 3 900 540
- US-A- 4 761 308

## Beschreibung

Die Erfindung betrifft ein Verfahren zur Herstellung von freitragenden Formkörpern aus pyrolytischem Graphit, bei dem die Formkörper einer thermischen Nachbehandlung unterworfen werden.

Beispiele für derartige Formkörper sind die aus DE-C-2 450 261 bekannten Gitterelektroden für Elektronenröhren und die aus DE-A-2 949 275 bekannten Küvetten für die Atomabsorptionsspektroskopie.

Die thermische Nachbehandlung besteht gemäß DE-C-2 450 261 darin, daß die Gitterelektrode auf eine Temperatur zwischen 3000 und 3800 K erhitzt wird. Dadurch wird eine Erhöhung der elektrischen Leitfähigkeit der Elektrodenoberfläche erzielt, die auf einer Strukturveränderung des pyrolytischen Graphits beruht, nämlich auf einer erhöhten Anisotropie. Dieser Effekt wird insbesondere dadurch erzielt, daß die Erhitzung in einem Inertgas bei einem Druck zwischen 10⁶ und 5x10⁷ Pa vorgenommen wird.

In DE-C-2 450 261 und in DE-A-2 949 275 wird empfohlen, bei der Herstellung der freitragenden Formkörper durch reaktive Abscheidung von Schichten aus pyrolytischem Graphit aus einer Gasphase, die kohlenstoffhaltige Gase enthält, auf einem Dorn oder Substrat aus einem hochschmelzenden Werkstoff die aus DE-C-1 667 649 und DE-C-1 667 650 bekannten Abwandlungen des Heißwandpyrolyseverfahrens anzuwenden. Aus DE-C-1 667 649 und DE-C-1 667 650 ist es bekannt, daß mit diesen Pyrolyseverfahren in vielen Fällen eine derart günstige Struktur und Anisotropie erzielt wird, daß eine thermische Nachbehandlung unterbleiben kann, während bei den seinerzeit bekannt gewesenen Pyrolyseverfahren eine thermische Nachbehandlung bei etwa 3100 K durchgeführt wird.

Freitragende Formkörper aus pyrolytischem Graphit kommen zunehmend in Gebrauch. Dies erfordert deren Herstellung in großen Stückzahlen. Bei einer derartigen Massenfertigung ist die Einheitlichkeit der einzelnen Chargen von großer Bedeutung. Es ist daher erwünscht, daß die Reinheit und der elektrische Widerstand aller Formkörper einer Charge innerhalb einer schmalen Bandbreite liegen.

Der Erfindung liegt die Aufgabe zugrunde, Formkörper aus pyrolytischem Graphit mit konstanter hoher Reinheit und konstanten physikalischen Materialeigenschaften zu schaffen, wobei unter "konstant" eine möglichst geringe Bandbreite dieser Eigenschaften zu verstehen ist.

Diese Aufgabe wird erfindungsgemäß dadurch gelöst, daß die Formkörper zur verunreinigenden hochschmelzenden Metallen wie insbesondere Vanadium und/oder Wolfram in einem erhitzten Kohletiegel unter einem Vakuum von 10-1 bis 10-² Pa innerhalb 1 3/4 bis 2 1/4 Stunden auf eine Temperatur von 2950 bis 3050 K gebracht werden und 50 bis 70 Minuten lang auf dieser Temperatur gehalten werden.

Die Verunreinigung der Formkörper durch hochschmelzende Metalle beruht möglicherweise auf der Verwendung von Dornen oder Substraten, die diese Verunreinigungen enthalten, z.B. von Dornen oder Substraten aus Elektrographit.

Die Erhitzungsdauer ist dann zu kurz, um selbst bei diesen hohen Temperaturen eine merkliche Rekristallisation in Richtung Einkristallbildung zu verursachen. Sie reicht jedoch aus, um die Verunreinigungen wenigstens teilweise durch Verdampfung aus dem Formkörper zu entfernen, wo hingegen kein Verdampfen des pyrolytischen Graphits auftritt. Dabei können sich zeitweise Carbide und Subcarbide bilden. Die Erhitzung wird im Vakuum vorgenommen. Demgegenüber werden thermische Nachbehandlungen zur Strukturverbesserung, wie bereits erwähnt, vorzugsweise unter Druck vorgenommen.

Bei Anwendung des erfindungsgemäßen Verfahrens werden an den behandelten Formkörpern keine Strukturveränderungen sichtbar, auch nicht bei Beobachtung durch ein optisches Mikroskop. Daß dabei aber Veränderungen im submikroskopischen Bereich stattfinden, ergibt sich aus Veränderungen der elektrischen Eigenschaften. Diese Veränderungen, die vermutlich auf einer beginnenden Graphitisierung beruhen, bedürften einer viel längeren Erhitzung auf höhere Temperaturen, um sichtbar zu werden.

Temperaturen in der Größenordnung von 3000 K sind am besten geeignet, die erwünschte Wirkung zu erzielen. Niedrigere Temperaturen erfordern sehr viel längere Erhitzungszeiten. Höhere Temperaturen führen zu nicht beherrschbaren Veränderungen der Materialeigenschaften und/oder der Abmessungen der Formkörper, unter Umständen sogar zu einer Delaminierung des pyrolytischen Graphits, sowie zu einem unerwünschten Verdampfen von Kohlenstoff aus den erhitzten Formkörpern.

Die Erfindung wird an Hand eines Ausführungsbeispiels näher erläutert.

Eine thermische Nachbehandlung von Küvetten für die Atomabsorptionsspektroskopie, die ausschließlich aus pyrolytischem Graphit bestanden, wurde in einem Ofen durchgeführt, der eine sehr reine die Küvetten umgebende Atmosphäre sicherstellt. Der verwendete Ofen stellt eine geringfügige Abwandlung des Ofens dar, der von C.J. Kapteyns und W.F. Knippenberg in J. Cryst. Growth 7 (1970) 20-28 beschrieben und in Fig. 2 auf Seite 21 dieses Dokuments dargestellt ist. Dieser Ofen bestand aus einem Tiegel aus pyrolytischem Graphit mit einer Gesamt-Wanddicke von etwa 10 bis 12 mm, einem äußeren Durchmesser von etwa 110 mm, einem inneren Durchmesser von 86 bis 90 mm und einer Höhe von 120 mm. Dieser Tiegel wurde mit Lagen aus Kohlenstofffilz bis zu einer Dicke von etwa 30 mm isoliert. Der Tiegel wurde mit einem Deckel versehen, in einen wassergekühlten Rezipienten eingebracht und durch Mittelfrequenz-Induktionsheizung, z.B. bei 10 kHz, aufgeheizt. Der in Fig. 1 auf Seite 21 des obengenannten Dokuments dargestellte Rezipient, ein wassergekühltes Glasgefäß, war evakuierbar bzw. mit einem umgebenden Glas füllbar.

Etwa 500 Küvetten von 6 mm Durchmesser und 28 mm Länge wurden in den Tiegel eingebracht und unter einem Vakuum von etwa 10⁻¹ Pa und folgenden weiteren Bedingungen thermisch behandelt:
Innerhalb 2 Stunden wurde der Tiegel von Zimmertemperatur auf eine Temperatur von etwa 3000 K gebracht und etwa 1 Stunde auf dieser Temperatur gehalten. Dann wurde der Tiegel innerhalb etwa 16 Stunden auf Zimmertemperatur abgekühlt.

Das Ergebnis dieser Behandlung wird durch folgende Werte belegt, die an den Küvetten gemessen wurden:
Der Gehalt an Vanadium, der hartnäckigsten Verunreinigung, wurde von etwa 10 ppm auf unter 300 ppb abgesenkt.Dies hat den Vorteil, daß bei der Verwendung dieser Küvetten bei der Atomabsorptionsspektroskopie eine Nachweisgrenze unterhalb 1 ppb in der Gasphase erreicht wird.

Der mittlere elektrische Widerstand der Küvetten verringerte sich von 35 Milliohm ± 10 Milliohm auf 25 Milliohm ± 5 Milliohm.

## Patentansprüche

1. Verfahren zur Herstellung von freitragenden Formkörpern aus pyrolytischem Graphit, bei dem die Formkörper einer thermischen Nachbehandlung unterworfen werden,
dadurch gekennzeichnet, daß die Formkörper zur Entfernung von verunreinigenden hochschmelzenden Metallen wie insbesondere Vanadium und/oder Wolfram in einem erhitzten Kohletiegel unter einem Vakuum von 10-¹ bis 10-² Pa innerhalb 1 3/4 bis 2 1/4 Stunden auf eine Temperatur von 2950 bis 3050 K gebracht werden und 50 bis 70 Minuten lang auf dieser Temperatur gehalten werden.

## Claims

1. A method of manufacturing self-supporting shaped bodies from pyrolytic graphite, in which method the shaped bodies are subjected to a thermal aftertreatment, characterized in that to remove contaminating high-melting-point metals such as, in particular, vanadium and/or tungsten, the shaped bodies are held in a heated carbon crucible under a vacuum of 10⁻¹ Pa to 10⁻² Pa and are heated within 1¾ to 2¼ hours to a temperature of 2950 K to 3050 K at which temperature they are kept for 50 to 70 minutes.

## Revendications

1. Procédé visant la fabrication de corps moulés de forme stable en graphite pyrolytique, les corps moulés étant soumis à un traitement thermique complémentaire, caractérisé en ce que pour l'enlèvement de métaux contaminants, tels que notamment le vanadium et/ou le tungstène, les corps moulés sont portés en moins de 1 3/4 à 2 1/4 heures à une température comprise entre 2950 et 3050 K et sont maintenus à cette température pendant 50 à 70 minutes, dans un creuset en graphite chauffé, sous un vide compris entre 10⁻¹ et 10⁻² Pa.
